# EUROPEAN PATENT SPECIFICATION

(11) **EP 2 059 442 B1**
(45) Date of publication and mention of the grant of the patent: **25.01.2012**
(21) Application number: 07766410.0
(22) Date of filing: 01.08.2007
(51) Int. Cl.: B64F 5/00

(54) **AEROENGINE WASHING SYSTEM AND METHOD**
FLUGTRIEBWERKWASCHSYSTEM UND -VERFAHREN
SYSTEME DE LAVAGE DE MOTEUR D'AERONEF ET PROCEDE

(30) Priority: 30.08.2006 GB 0617043
(43) Date of publication of application: 20.05.2009
(73) Proprietor: Rolls-Royce plc, London SW1E 6AT (GB)
(72) Inventor: BLATCH, Stuart, Michael, Mark, Derby DE73 8LT (GB)
(74) Representative: Barcock, Ruth Anita
(86) International application number: PCT/GB2007/002927
(87) International publication number: WO 2008/025940

(56) References cited:
- WO-A-2005/120953
- WO-A-2005/121509
- DE-U1- 9 420 362
- US-A- 4 279 263
- US-A- 5 423 339
- US-B1- 6 565 758

## Description

The present invention relates to a system and a method for washing an aeroengine and particularly, but not exclusively, a mobile washing system.

During the service life of a gas turbine engine and particularly aeroengines, engine derived contaminants and ingestion of airborne particles lead to a build up of matter on aerodynamic surfaces such as fan blades, blades and vanes of compressors and turbines and airflow duct walls. This undesirable build-up of matter causes a loss of efficiency of the engine leading to reduced thrust and/or increased fuel burn resulting in increased environmental pollution compared to a clean engine. For the engine's operator this loss of efficiency increases fuel costs and results in shorter intervals between engine overhauls.

Washing aeroengines to improve engine performance is well known and usually comprises spraying a liquid into the engine's intake and through a fan blade array, while the engine is being cranked over. A suitable pressurised and mobile washing rig is available from A.T. Jupiter (Liverpool) Ltd. The wash liquid cleans the fan blades and enters the core of the engine where it washes the core compressors and turbines. In doing so the effluent can become contaminated to an extent that the effluent must be captured and treated prior to it being disposed of or reused.

WO2005/121, 509, which constitutes the closet prior art, discloses a mobile aeroengine washing cart comprising a chute, and a well-known droplet separator (available from Munters® Europe AB, Sweden). The chute is positioned under the engine to catch wash effluent; while the droplet separator is positioned to the rear of the engine's exhaust nozzle(s) to remove liquid particles from the engine's efflux. The collected effluent is directed via a trough into a tank for treatment or storage, another suitable treatment system is disclosed in US6,565,758. The mobile cart of W02005/121,509 also comprises screens on each side to prevent air borne waste liquid to escape the sides. This mobile aeroengine washing cart includes a scissor lift for adjusting the height of a frame mounting the chute, lateral walls and droplet separator. However, this arrangement is disadvantaged for a number of reasons; firstly the height adjustment mechanism is required to lift the whole frame and is therefore necessarily heavy, secondly the lateral walls and droplet separator are of a fixed size and/or height that cannot easily accommodate larger engine nozzles diameters or otherwise be too large for efficient transportation.

Therefore it is an object of the present invention to provide a mobile washing system and a method of operating the system that is capable of accommodating many different engine sizes and heights while being compact enough in its stowed position for easy transportation.

In accordance with the present invention a gas turbine engine washing cart comprises a platform having a drip tray, a front wall and lateral walls that capture droplets carried in the efflux or streams/droplets from an engine during washing wherein the system comprises actuation means capable of rotating or elongating at least one wall between stowed and deployed positions and is characterised in that the washing cart comprises a control system for automatic operation of the actuation means and the control system is programmed with a set of actuator positions to deploy the walls or drip tray to accommodate different engine sizes, configurations or washing operations.

Movement between stowed and deployed positions may be a rotation of part or all of the wall or an elongation or shortening of the wall relative to the platform.

The wall may comprise a first portion joined to the platform and a second portion arranged at an angle to the first portion to further surround the engine efflux.

The wall or a portion of the wall may be arcuate.

The wall may comprise extendable telescopic struts.

The wall may comprise a scissor arrangement coupled to an actuator for extension / contraction of the walls.

The wall may be rotatably mounted to the platform and a second actuator extends between the wall and platform and enables angular movement of the walls.

The wall may be extendable via folding wall portions, the folding wall portions are rotatably attached to one another and an actuator extends between one portion and the platform and enables movement of the wall portion.

The wall may be constructed from a frame structure and mounted thereto is a flexible sheet.

The wall may comprise at least two relatively slidable parts or units.

The wall may comprise a droplet separator. The droplet separator is any one of a group comprising a profiled or a carpet style separator.

The drip tray may be an extendable drip tray that is moveable from a stowed position to a deployed position where it is directly under the engine to catch liquid streams or droplets falling from the engine.

The extendable drip tray may be stowed within the platform.

In a second aspect of the present invention there is provided a method of washing a gas turbine engine with a washing cart as described in the preceding paragraphs, the method comprises selecting a program for a particular engine configuration and the step of elongating or rotating the at least one wall between stowed and deployed positions.

The present invention will be more fully described by way of example with reference to the accompanying drawings in which:
Figure 1 is a schematic section of a ducted fan gas turbine engine and a mobile washing cart in accordance of the present invention;
Figures 2 and 3 are perspective views of the mobile cart in its deployed and stowed arrangements respectively in accordance of the present invention;
Figure 2A is an enlarged part view of a deployable drip tray and sump arrangement seen in Figure 2 in accordance of the present invention;
Figures 4, 5A and 6 are views of the deployable lateral walls showing their deployment mechanisms and construction in stowed and deployed positions in accordance of the present invention;
Figure 5B is a view of an alternative deployment mechanism of the lateral walls in accordance of the present invention;
Figures 7 and 8 show an alternative deployment mechanism and construction of lateral walls in accordance of the present invention;
Figure 9 is a schematic side view of a first deployment arrangement of the front wall comprising a waste liquid collector in accordance of the present invention;
Figure 10 is a schematic side view of a second deployment arrangement of the front wall comprising a waste liquid collector in accordance of the present invention;
Figure 11 is a schematic side view of a third deployment arrangement of the front wall comprising a waste liquid collector in accordance of the present invention;
Figure 12 is a schematic side view of a fourth deployment arrangement of the front wall comprising a waste liquid collector in accordance of the present invention;
Figure 13 is a section through a first embodiment of a waste liquid collector in accordance of the present invention;
Figure 14 is a section through a second embodiment of a waste liquid collector in accordance of the present invention;
Figure 15 is a perspective view of an alternative arrangement of a lateral wall in accordance with the present invention.

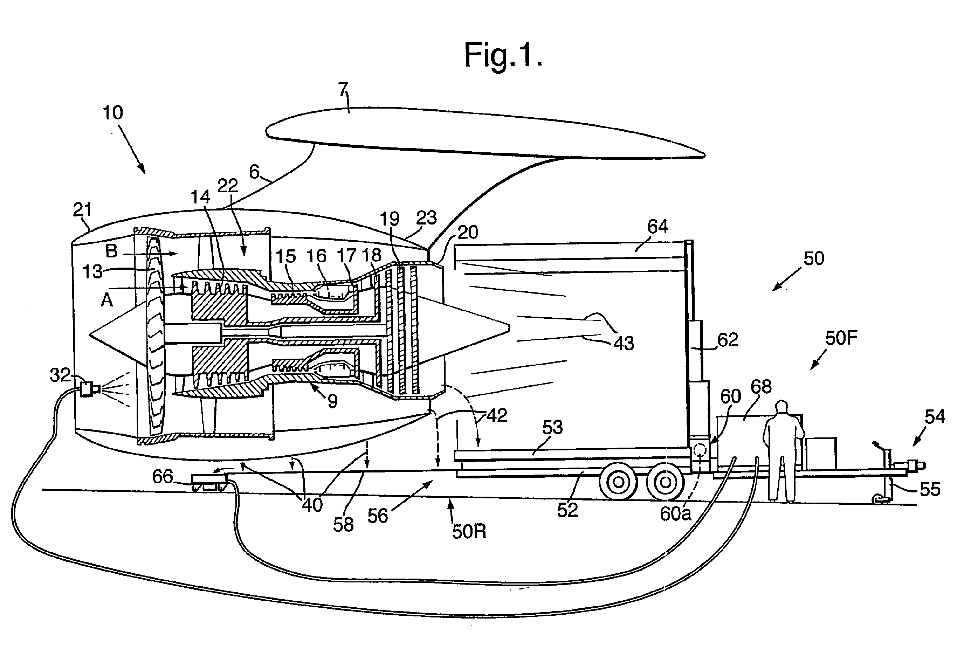

Referring to Figure 1, a ducted fan gas turbine engine generally indicated at 10 is suspended via a pylon 6 from a wing 7 of an aircraft. The engine 10 comprises, in axial flow series, an air intake 12, a propulsive fan 13, a core engine 9 comprising an intermediate pressure (IP) compressor 14, a high-pressure (HP) compressor 15, combustion equipment 16, a HP turbine 17, and IP turbine 18, a low-pressure (LP) turbine 19 and a core exhaust nozzle 20. A nacelle 21 generally surrounds the engine 10 and defines the intake 12, a bypass duct 22 and an exhaust nozzle 23.

The gas turbine engine 10 works in the conventional manner so that air entering the intake 11 is accelerated by the fan 13 to produce two air flows: a first airflow A into the IP compressor 14 and a second airflow B which passes through a bypass duct 22 to provide propulsive thrust. The IP compressor 14 compresses the airflow A directed into it before delivering that air to the HP compressor 15 where further compression takes place.

The compressed air exhausted from the HP compressor 15 is directed into the combustion equipment 16 where it is mixed with fuel and the mixture combusted. The resultant hot combustion products then expand through, and thereby drive the HP, IP and LP turbines 17, 18, 19 before being exhausted through the nozzle 20 to provide additional propulsive thrust. The HP, IP and LP turbines 17, 18, 19 respectively drive the HP and IP compressors 15, 14 and the fan 13 by suitable interconnecting shafts.

When this engine 10 is washed it may be either nonrotating, cranked via a gearbox (not shown) or at idle speed. Cranking the engine 10 is particularly beneficial when the core engine 9 is washed as the cleaning fluid is forced through the engine's many rows of blades and vanes in the compressors and turbines.

During engine washing waste fluids emerge from a) drainage holes (not shown) in the nacelle 21 as streams or droplets 40, b) the nozzles 20, 23 shown by streams or droplets 42 and c) the nozzles 20, 23 as droplets 43 carried in the efflux particularly when the engine is being cranked over. As the effluent may contain contaminants that might be harmful to the environment this waste fluid is required to be collected and treated. For this purpose a mobile waste fluid collection cart 50 is provided in accordance with the present invention.

The mobile waste fluid collection cart 50 comprises a wheeled chassis or platform 52 having at a front end 50F a towing attachment 54 and rearwardly a deployable collection system 56. The deployable collection system 56 comprises an extendable front wall 62, deployable lateral walls 64, an extendable drip or collector tray 58 and a collection sump 66.

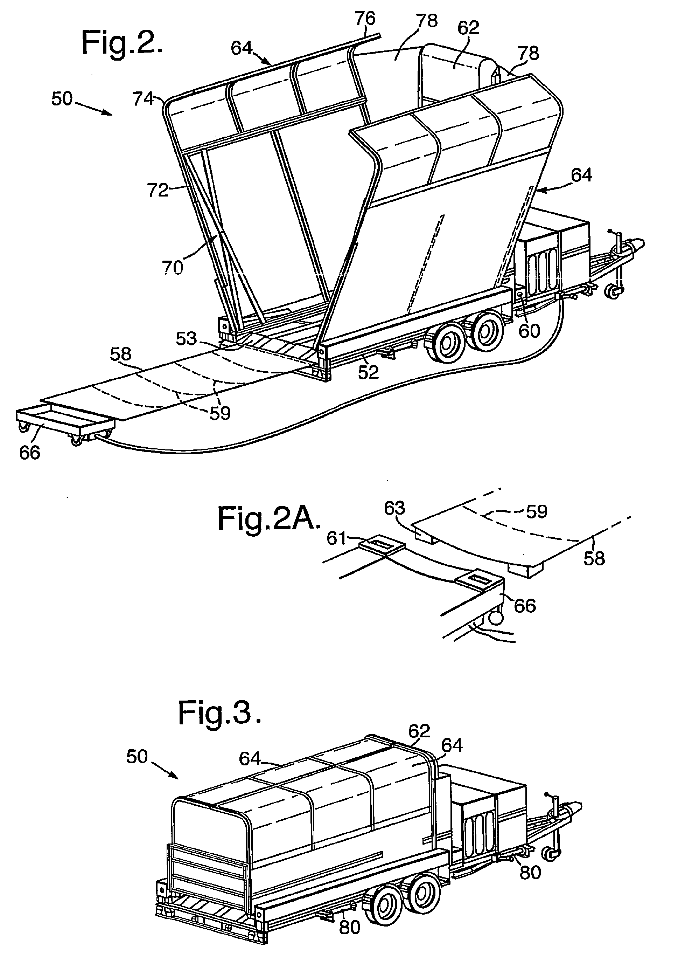

The drip tray 58 is an impermeable fabric sheet that extends between the front 50F of the cart 50, under a floor 53 of the platform 52 and is extendable from the rear 52R of the cart 50 during engine washing. The mobile cart 50 is positioned behind the engine (Figure 1) such that the extendable tray 58 is directly under the engine 10 to catch liquid 40, 42. The drip tray 58 is an impervious flexible sheet partly stowed in a housing 60, located near the front 50F of the cart 50, which comprises a biased roller 60a. The drip tray 58 extends laterally across the width of the cart 50 so that wash effluent running down the lateral walls 64 or front wall 62 drips onto the drip tray 58. The drip tray 58 also collects the streams or droplets 40, 42 falling directly from the engine. The drip tray 58 is slightly troughed from side to side and channels the waste fluid rearwardly to the sump 66. The slight trough is created by curved ribs 59 attached to its underside. As seen in Figure 2A, the drip tray 58 comprises hooks 63 which engage into slots 61 defined in the sump 66.

The cart 50 also comprises a washing system 68 comprising a fluid reservoir, a storage tank, a power generator, a filtration device and a heating / jet wash system connected to the nozzle 32. The heating / jet wash system includes a pump for pressurising washing fluid to the nozzle 32. A further pump is provided on the cart 50 to transfer waste fluid from the sump 66 to the filtration device or the storage tank.

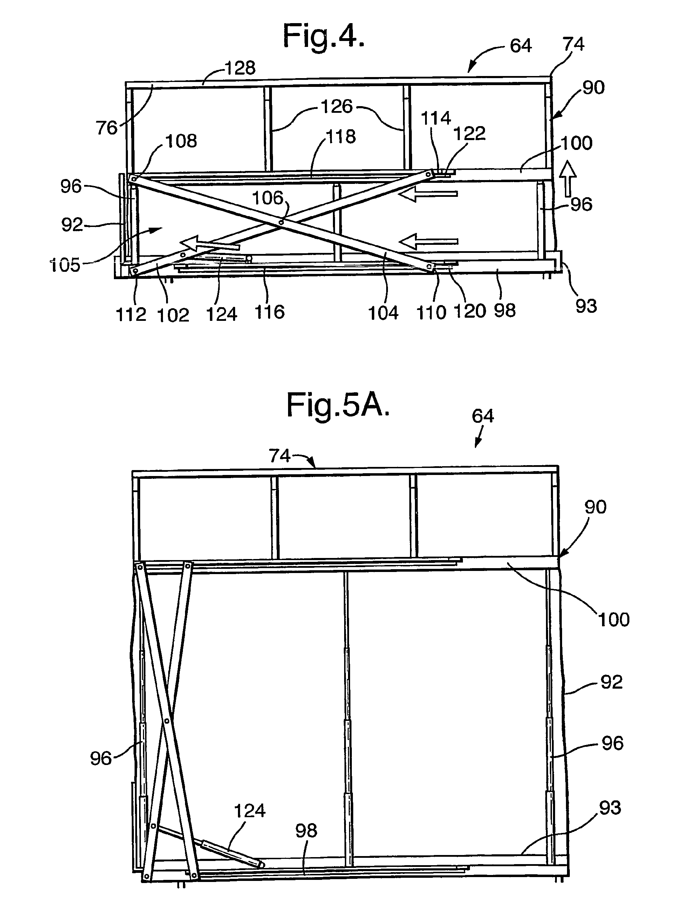

Figures 2 and 3 illustrate the mobile cart 50 in its deployed and stowed arrangements respectively. Each lateral wall 64 is movable between its deployed and stowed positions via a deployment mechanism 70 that is described in more detail later with reference to figures 4-6. Each wall 64 comprises a generally straight portion 72 and a curved portion 74 having a free edge 76. In the stowed position the free edges 76 of the two walls 64 meet and are latched together by means (not shown) for transportation. The deployment mechanism itself also provides a closure bias. The walls 64 are deployable both to vary their height from the platform 52 and angle from vertical. The walls 64 may be divergent where a particularly large engine is being washed or even convergent where a smaller diameter engine or other object is being washed.

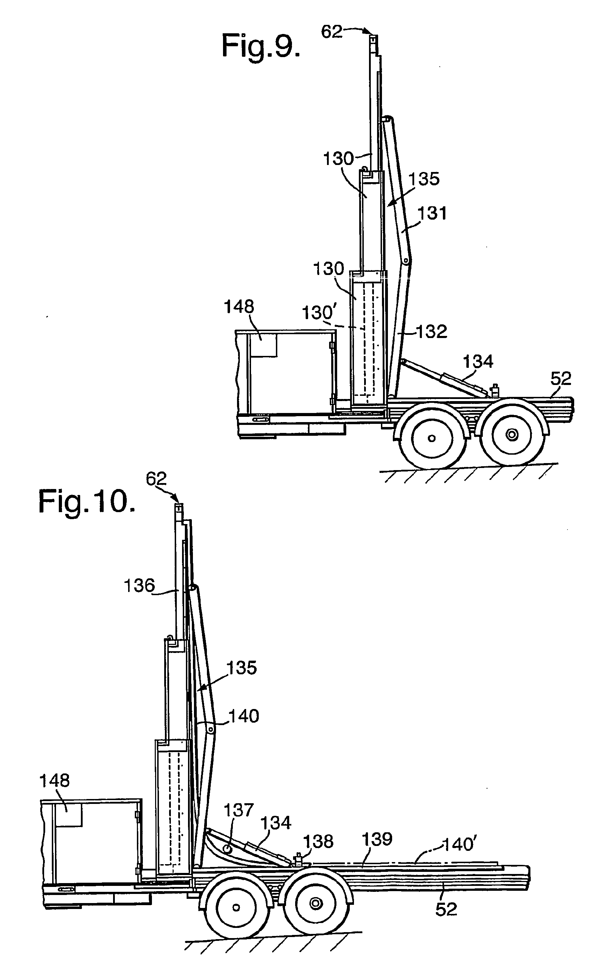

The front wall 62 is also deployable and comprises a deployment mechanism, which is described in more detail with reference to figures 9-12. A curtain 78 extends between each of the lateral walls 64 and the end wall 62.

With reference to Figures 4-6, the lateral walls 64 each comprise a frame 90 covered by a sheet material 92. The sheet material 92 is secured to the free end 76 of the lateral wall 64 and at positions over the frame, and is held taught over the extendable straight part 72 of the frame 90 via a biasing mechanism located in a housing 93 where the sheet is rolled. The sheet 92 is impervious to the wash fluid. The sheet 92 is fed around a roller 95, attached to the frame 90, and extends along the length of the wall 64.

Alternatively, the sheet may extend over only the straight or lower extendable part 72, with the upper or curved part 74 having another sheet or rigid panelling.

The frame 90 at one end is rotatably secured to the platform 52 via pinned supports 94. The frame 90 comprises a number of extendable support struts 96 extending between lower and upper beams 98, 100. Also connecting between the two beams 98, 100 are two rods 102, 104 forming part of a scissor arrangement 105. The rods 102, 104 are pinned 106 together where they cross over and free to rotate about the pin 106. One end of rod 102 is rotatably secured via a pin 108 to the upper beam 100 and its other end is rotatably and slidably attached 110 to the lower beam 98. Similarly, one end of rod 104 is rotatably secured via a pin 112 to the lower beam 100 and its other end is rotatably and slidably attached 114 to the upper beam 98. The two rotatable and slidable attachments 110, 114 comprise guide rails 116, 118 on the lower and upper beams 98, 100 respectively, and runners 120, 122 that cooperate therewith. The rods 102, 104 are pinned to the runners 120, 122 to allow for rotation.

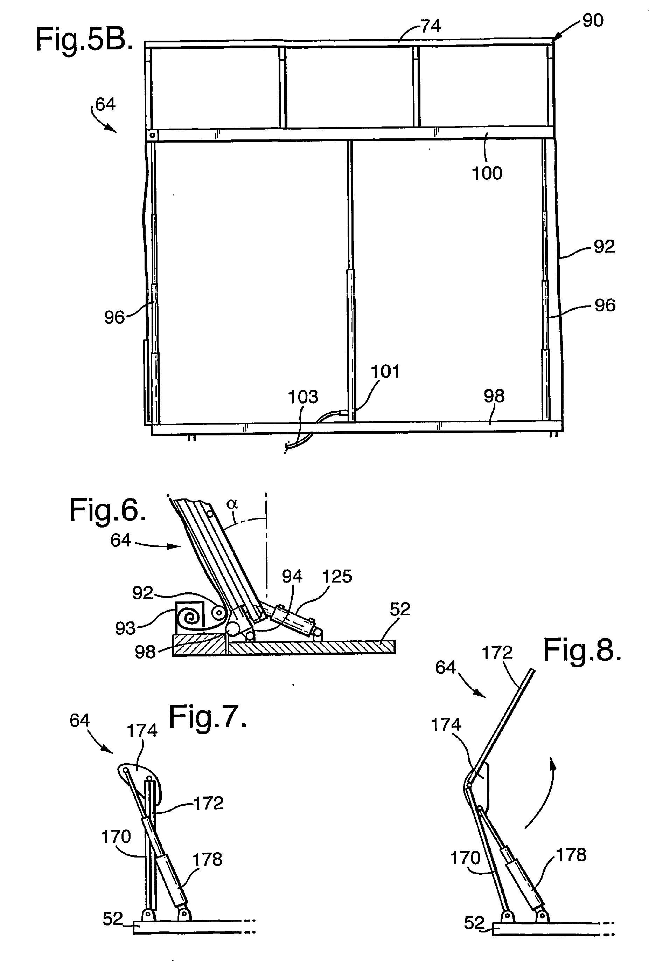

A hydraulic ram 124 (Figures 4 and 5) is rotatably attached between the lower beam 98 and the rod 102 of each wall 64 and when activated is capable of moving the rod 102 such that it and rod 104 move scissor-like to extend or retract the height of the lateral wall 64. In doing so the sheet 92 rolls and unrolls in its housing 93 and the support struts 96 extend and shorten.

A second hydraulic ram 125 (Figure 6) is rotatably attached between the platform 52 and the frame 90 and when activated is capable of rotating the frame to a desired angle α dependent on the engine size. Typically the angle α is about 25 degrees, but may be up to 45 degrees or more in extreme cases.

The frame 90 also includes the curved portion 74 which is supported off the upper beam 100 and consists of a number of members 126 and a beam 128 at its free end 76. The members 126 comprise an arcuate portion curved at about 90 degrees and best seen in figures 2 and 3. This arcuate portion is desirable because the two lateral walls form a compact stowed position for transport as well as providing a more enclosed space during engine washing for retaining the waste efflux.

Figure 5B is a view of an alternative deployment mechanism of the lateral walls 64, and comprises a hydraulic actuator 101 instead of the scissor mechanism of the Figure 5A embodiment. Similarly, the frame 90 comprises a number of extendable support struts 96 extending between the lower and upper beams 98, 100. The hydraulic actuator 101 is fed, via pipe 103, compressed hydraulic fluid from a pump on the cart 50. The actuator 101 and pump are electronically controllable so that the actuator's position is variable between a deployed position as shown and a stowed position similar to that seen in Figure 4. It should be appreciated that more than one actuator 101 may be used and where more than one is used then the extendable support struts 96 may be excluded. The Figure 5B embodiment is otherwise similar to the Figure 5A embodiment and no further discussion is required.

An alternative arrangement of the lateral walls 64 is shown in Figures 7 and 8, which show the stowed and deployed positions respectively. Each lateral wall 64 comprises two panels 170, 172 rotatably connected together. The lower panel 170 is rotatably mounted to the platform 52. The upper panel 172 comprises a lever plate 174 that is rigidly mounted thereto. A hydraulic ram 178 attaches between the lever plate 174 and platform 52. The lateral walls 64 are deployed via actuation of hydraulic ram 178, which is electronically controllable and pre-programmable. The ram 178 pulls the lever 174, rotating the upper panel 172 to a desired angle and/or position. A second actuator 125, not shown but as described with reference to Figure 6, is provided to adjust the angle of the lower panel 170.

Referring now to Figure 9 a first embodiment of the deployable front wall 62 employs a telescopic array of droplet separator units 130, in this case three units. Of course two or four or more units 130 may be used depending on their height and required extension. The droplet separators 130 are commercially available 'profile separators' e.g. Munters® Europe AB, Sweden. A deployment mechanism comprises two rods 131, 132 rotatably attached to one another with the other end of rod 131 rotatably attached to the upper most unit 130 and other end of rod 132 to the lower unit 130 or the platform 52. A hydraulic ram (actuator) 134 connects between the lower rod 132 and the platform 52. In the stowed position (shown by dashed lines 131') the three droplet separators 130 are nested substantially within the lower unit 130 for ease of transportation. Alternatively, in the stowed position the three droplet separators 130 may be stowed simply stacked - parallel and adjacent to one another.

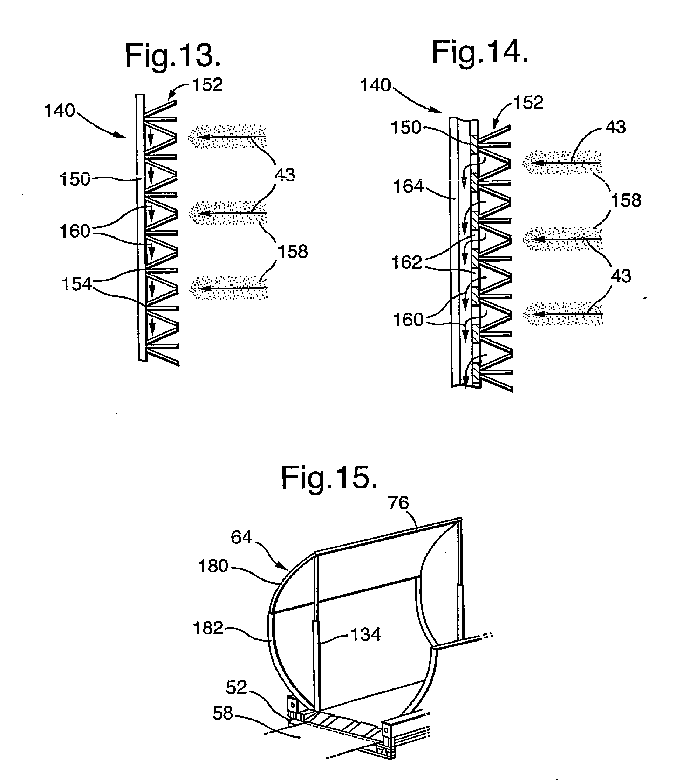

Alternate to the 'profile separators' a textured 'carpet style' droplet collector may be used. Details of the carpet style droplet collector are discussed with reference to Figures 13 and 14 below. Nonetheless, panels of carpet separators may simply be attached to the front face 135 of each unit 130.

In an alternative embodiment shown in Figure 10, the waste effluent collector is a single large carpet style droplet collector 140. Simple frames 136 for structural support replace the extending units 130 of the previous embodiment here. The carpet style droplet collector 140 is attached to and extends from an upper part of an upper frame 136 over the front face 135 and around a guide 137 and has a slidable attachment 138 with rails 139 on the platform 52. A deployment mechanism is similar to that shown in Figure 9 and is therefore not discussed further. In the stowed position the carpet 140 slides rearwardly and is generally parallel to the platform 52 as shown by the dashed lines 140'.

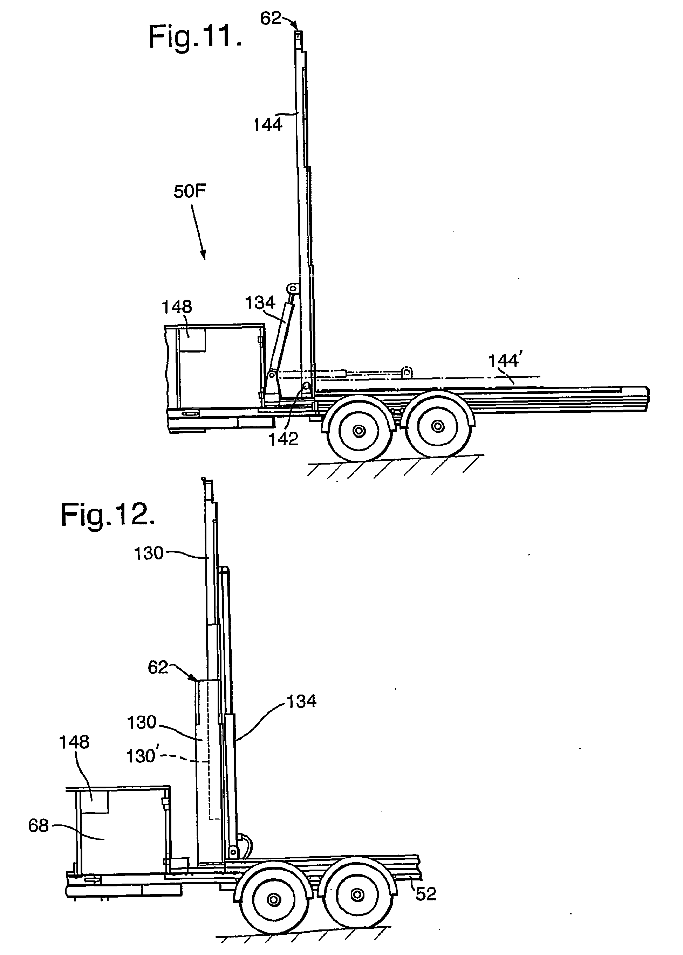

In yet another embodiment of the front wall 62 shown in Figure 11, a 'single height' wall 144 is rotatably mounted 142 to the platform 52 towards the front of the cart 50F. A hydraulic ram (or other actuator) 134 is rotatably attached between and to the wall 62 and platform 52. The wall is seen in its deployed position 144 and in its stowed position 144', generally parallel to the platform 52. The droplet collector 130, 140 may be either profile or bristle style.

Turning now to the fourth embodiment of the front wall 62 shown in Figure 12, this fourth deployment arrangement comprises a droplet separator or waste liquid collector in accordance with any other embodiment of the present invention described herein e.g. a profile separator 136 or a carpet style 140, 135. The fourth deployment arrangement comprises a hydraulic actuator 134 positioned generally vertically so that the nested or telescopic part 130 are movable between the stowed 130' and deployed 130 positions.

In each of Figures 9-12, as well as the other figures, the actuators or hydraulic ram 134 are controllable via electronic control means 148 to move the front wall 62 or lateral walls 64 between their stowed and deployed positions. Furthermore, the electronic control means 148 is pre-programmed to automatically adjust the front wall 62 or lateral walls 64, and preferably in cooperation with one another, to predetermined positions depending on aircraft and engine configuration.

Referring now to Figure 13, a first embodiment of the bristle style droplet collector 140 comprises an impervious panel 150 and an array of bristles 152 extending from a surface of the panel 150. The bristles 152 are arranged in groups 154 and each group of bristles 154 fans out as they extend away from the surface. Engine efflux 43 during the washing cycle carries particles of liquid 158 which impact on the bristles, forming droplets which in turn coalesce and trickle through the bristles and over the surface of the panel 150 as shown by arrows 160. The bristles dissipate the energy of the efflux sufficiently so that the droplets settling on the bristles do not become airborne again.

In Figure 14 an alternative arrangement of the bristle style droplet collector 140 is shown. In this embodiment the collector 140 comprises an impervious backing member 164 spaced from the panel 150. The panel 150 comprises holes 162 which allow the captured waste liquid to flow through as shown by arrows 160. The space between the backing member 164 and the panel 150 allows a greater flow of waste liquid and further ensures that it does not become airborne again.

Figure 15 shows an alternative arrangement of a lateral wall 64 that comprises two arcuate wall parts 180, 182. The wall parts are slidably mounted together either telescopically within one another as shown or side by side. An actuator 134 is attached between the platform 52 and the upper wall part 180 to extend the wall 64 to its deployed position. The actuator 134 is shown as a straight member, but may also be arcuate and complimentary to the wall so that it does not interfere with the engine or its efflux when in operation. The free end 76 again closes to its opposing free end on the opposite lateral wall.

In both Figure 13 and 14 embodiments of the carpet style droplet collector 140 the density and configuration of the droplets may be easily changed to suit particular applications dependent on engine efflux 43 properties for example its velocity and density of liquid droplet.

The bristles 152 or groups of bristles are arranged in columns so that captured waste liquid may run between the columns more easily. The array of bristles fan out so that the efflux 43 sees an even covering as it impinges against the droplet collector 140.

Although specific configurations of the deployment mechanisms are described for each the lateral and front walls the mechanisms of each may be interchangeable therebetween and without departing from the scope of the present invention.

The mobile cart 50 may be integrated with a tractor unit so that it is self-propelling rather than as a trailer as shown and described herein. The necessary adaptations of such integration would be readily appreciated by the ordinary skilled person.

The towing attachment 54 includes a jacking wheel 55 which may be used to angle the cart 50 and drip tray 58. In figures 1 and 2 the drip tray 58 is angled so that the engine waste fluid drains rearwardly, i.e. from right to left on the figures. Alternatively the jacking wheel 55 may angle the cart 50 forwardly so that engine waste fluids drain towards the end wall 62; here the sump 66 is integrated into the drip tray 58 generally below the end wall 62.

Referring to figure 3, the cart 50 also comprises support legs 80 generally positioned at each corner of the chassis 52. The legs 80 are hydraulically operated and controlled to angle the cart 50 as desired. Alternatively the legs 80 may be manually operated via a screw drive as is well known in the art.

Various modifications of the drip tray 58 may be made without departing from the scope of the present invention. For example, the biased roller 60 may be positioned at the rear of the cart 50 and extendable rearwardly therefrom. Here the floor 53 of the cart 50 may be made impermeable so that washing fluid dripping onto it from either walls 64, 62 or directly from the engine 10 is channelled towards the rear of the cart 50 and onto the extendable drip tray 58. The drip tray 58 may be a rigid construction and slidably mounted to the underside of the floor 53 for stowage and deployment. The sump 66 may also be integrated into the drip tray 58 and therefore stowable in a housing at the rear of the cart 50.

## Claims

1. A gas turbine engine washing cart comprising a platform (52) having a drip tray (58), a front wall (62) and lateral walls (64) that can capture droplets (43) carried in the efflux or streams/droplets (40,42) from an engine during washing wherein the system comprises actuation means capable of rotating or elongating at least one wall (64, 62) between stowed and deployed positions and is **characterised in that** the washing cart (50) comprises a control system (148) for automatic operation of the actuation means and the control system is programmed with a set of actuator positions to deploy the walls (62, 64) or drip tray (58) to accommodate different engine sizes, configurations or washing operations.

2. A gas turbine engine washing cart as claimed in claim 1 wherein movement between stowed and deployed positions is a rotation of part or all of the wall (62, 64) or an elongation or shortening of the wall (64) relative to the platform (52).

3. A washing cart (50) as claimed in any one of claims 1-2 wherein the wall (62, 64) comprises a first portion (72) joined to the platform (52) and a second portion (74) arranged at an angle to the first portion (72) to further surround the engine efflux.

4. A washing cart (50) as claimed in any one of claims 1-3 wherein the wall (64, 62) or a portion of the wall (72, 74) is arcuate.

5. A washing cart (50) as claimed in any one of claims 1-4 wherein the wall (64, 62) comprises extendable telescopic struts (64).

6. A washing cart (50) as claimed in any one of claims 1-5 wherein the wall (64, 62) comprises a scissor arrangement (105) coupled to an actuator (124) for extension / contraction of the walls (64, 62).

7. A washing cart (50) as claimed in any one of claims 1-6 wherein the wall (64, 62) is rotatably mounted to the platform (52) and a second actuator (125) extends between the wall and platform and enables angular movement of the walls (64, 62).

8. A washing cart (50) as claimed in any one of claims 1-7 wherein the wall (64, 62) is extendable via folding wall portions (170, 172), the folding wall portions are rotatably attached to one another and an actuator (174) extends between one portion and the platform and enables movement of the wall portion.

9. A washing cart (50) as claimed in any one of claims 1-8 wherein the wall (64, 62) is constructed from a frame structure (90) and mounted thereto is a flexible sheet (92) .

10. A gas turbine engine washing cart as claimed in any one of claims 1-8 wherein the wall (62, 64) comprises at least two relatively slidable parts or units (130, 136).

11. A gas turbine engine washing cart as claimed in any one of claims 1-10 wherein the wall (62, 64) comprises a droplet separator.

12. A gas turbine engine washing cart as claimed in claim 11 wherein the droplet separator (130, 136, 144) is any one of a group comprising a profiled (130) or a carpet style (140) separator.

13. A gas turbine engine washing cart as claimed in any one of claims 1-12 wherein the drip tray (58) is an extendable drip tray (58) that is moveable from a stowed position to a deployed position where it is directly under the engine to catch liquid streams or droplets (40, 42) falling from the engine.

14. A gas turbine engine washing cart as claimed in claim 13 wherein the extendable drip tray (58) is stowed within the platform (52).

15. A method of washing a gas turbine engine with a washing cart as claimed in any one of claims 1-14, comprising the steps of moving the wall (64,62) relative to the platform (52), between a stowed position and a deployed position for capturing washing medium, the method comprises selecting a program for a particular engine configuration and the step of elongating or rotating the at least one wall (64, 62) between stowed and deployed positions.

## Patentansprüche

1. Gasturbinentriebwerk-Waschwagen mit einer Plattform (52), die eine Tropfschale (58), eine Vorderwand (62) und Seitenwände (64) aufweist, die in der Ausströmung mitgeführte Tropfen (43) oder Strömungen/Tropfen (40, 42) von einem Triebwerk während des Waschens auffangen können, wobei das System Betätigungseinrichtungen umfasst, die zumindest eine Wand (64, 62) zwischen verstauten und Betriebsstellungen drehen oder ausfahren können, **dadurch gekennzeichnet, dass** der Waschwagen (50) ein Steuersystem (148) zum automatischen Betrieb der Betätigungseinrichtungen umfasst und dass das Steuersystem mit einem Satz von Betätigungseinrichtungs-Positionen zum Einsetzen der Wände (62, 64) oder der Tropfschale (58) zur Berücksichtigung unterschiedlicher Triebwerks-Typen, Konfigurationen oder Waschvorgänge programmiert ist.

2. Gasturbinentriebwerk-Waschwagen nach Anspruch 1, bei der die Bewegung zwischen verstauten und Betriebsstellungen eine Drehung eines Teils Wand oder der gesamten Wand (62, 64) oder ein Ausfahren oder ein Einfahren der Wand (64) gegenüber der Plattform (52) ist.

3. Waschwagen (50) nach einem der Ansprüche 1 bis 2, bei dem die Wand (62, 64) einen ersten Teil (72), der mit der Plattform (52) verbunden ist, und einen zweiten Teil (74) umfasst, der unter einem Winkel zu dem ersten Teil (72) angeordnet ist, um die Triebwerks-Ausströmung weiter zu umgeben.

4. Waschwagen (50) nach einem der Ansprüche 1 bis 3, bei dem die Wand (64, 62) oder ein Teil der Wand (72, 74) bogenförmig ist.

5. Waschwagen (50) nach einem der Ansprüche 1 bis 4, bei dem die Wand (64, 62) ausfahrbare Teleskop-Streben (64) umfasst.

6. Waschwagen (50) nach einem der Ansprüche 1 bis 5, bei dem die Wand (64, 62) eine Scherenanordnung (105) umfasst, die mit einem Stellglied (124) zum Ausfahren/Einziehen der Wände (64, 62) verbunden ist.

7. Waschwagen (50) nach einem der Ansprüche 1 bis 6, bei dem die Wand (64, 62) drehbar an der Plattform (52) befestigt ist und ein zweites Stellglied (125) sich zwischen der Wand und der Plattform erstreckt und eine Winkelbewegung der Wände (64, 62) ermöglicht.

8. Waschwagen (50) nach einem der Ansprüche 1 bis 7, bei dem die Wand (64, 62) über Falt-Wandteile (170, 172) ausfahrbar ist, wobei die Falt-Wandteile drehbar aneinander befestigt sind und ein Stellglied (174) sich zwischen einem Teil und der Plattform erstreckt und eine Bewegung des Wandteils ermöglicht.

9. Waschwagen (50) nach einem der Ansprüche 1 bis 8, bei dem die Wand (64, 62) aus einer Rahmenstruktur (90) aufgebaut ist und an dieser eine flexible Bahn (92) befestigt ist.

10. Gasturbinentriebwerk-Waschwagen nach einem der Ansprüche 1 bis 8, bei dem die Wand (62, 64) zumindest zwei relativ zueinander verschiebbare Teile oder Einheiten (130, 136) umfasst.

11. Gasturbinentriebwerk-Waschwagen nach einem der Ansprüche 1 bis 10, bei dem die Wand (62, 64) einen Tropfen-Abscheider umfasst.

12. Gasturbinentriebwerk-Waschwagen nach Anspruch 11, bei dem der Tropfen-Abscheider (130, 136, 144) einer aus einer Gruppe ist, die einen profilierten (130) oder einen teppichartigen (140) Abscheider umfasst.

13. Gasturbinentriebwerk-Waschwagen nach einem der Ansprüche 1 bis 12, bei dem die Tropfschale (58) eine ausfahrbare Tropfschale (58) ist, die von einer verstauten Position auf eine Betriebsstellung bewegbar ist, in der sie sich direkt unter dem Triebwerk befindet, um Flüssigkeitsströme oder Tropfen (40, 42) aufzufangen, die von dem Triebwerk herunterfallen.

14. Gasturbinentriebwerk-Waschwagen nach Anspruch 13, bei dem die ausfahrbare Tropfschale (58) innerhalb der Plattform (52) verstaut wird.

15. Verfahren zum Waschen eines Gasturbinentriebwerks mit einem Waschwagen nach einem der Ansprüche 1 bis 14, mit den Schritten der Bewegung der Wand (64, 62) gegenüber der Plattform (52) zwischen einer verstauten Stellung und einer Betriebsstellung zum Auffangen von Waschmedium, wobei das Verfahren die Auswahl eines Programms für eine bestimmte Triebwerk-Konfiguration und den Schritt des Verlängerns oder Drehens der zumindest einen Wand (64, 62) zwischen verstauten und Betriebsstellungen umfasst.

## Revendications

1. Chariot de lavage de moteur de turbine à gaz comprenant une plateforme (52) ayant un bac récepteur (58), une paroi avant (62) et des parois latérales (64) qui peuvent capturer des gouttes (43) transportées dans le flux ou les ruissellements/gouttes (40, 42) depuis un moteur pendant le lavage, dans lequel le système comprend des moyens d'actionnement pouvant faire tourner ou allonger au moins une paroi (64, 62) entre des positions rentrée et déployée et est **caractérisé en ce que** le chariot de lavage (50) comprend un système de commande (148) pour le fonctionnement automatique des moyens d'actionnement et le système de commande est programmé avec un ensemble de positions d'actionneur pour déployer les parois (62, 64) ou le bac récepteur (58) pour accepter différentes tailles de moteur, configurations ou opérations de lavage.

2. Chariot de lavage de moteur de turbine à gaz selon la revendication 1, dans lequel le mouvement entre les positions rentrée et déployée est une rotation d'une partie ou de la totalité de la paroi (62, 64) ou un allongement ou raccourcissement de la paroi (64) par rapport à la plateforme (52).

3. Chariot de lavage (50) selon l'une quelconque des revendications 1 à 2, dans lequel la paroi (62, 64) comprend une première partie (72) assemblée à la plateforme (52) et une deuxième partie (74) assemblée selon un angle à la première partie (72) pour entourer davantage le flux de moteur.

4. Chariot de lavage (50) selon l'une quelconque des revendications 1 à 3, dans lequel la paroi (64, 62) ou une partie de la paroi (72, 74) est arquée.

5. Chariot de lavage (50) selon l'une quelconque des revendications 1 à 4, dans lequel la paroi (64, 62) comprend des entretoises télescopiques extensibles (64).

6. Chariot de lavage (50) selon l'une quelconque des revendications 1 à 5, dans lequel la paroi (64, 62) comprend un agencement de levage (105) couplé à un actionneur (124) pour l'extension/contraction des parois (64, 62).

7. Chariot de lavage (50) selon l'une quelconque des revendications 1 à 6, dans lequel la paroi (64, 62) est montée de manière rotative sur la plateforme (52) et un deuxième actionneur (125) s'étend entre la paroi et la plateforme et permet le mouvement angulaire des parois (64, 62).

8. Chariot de lavage (50) selon l'une quelconque des revendications 1 à 7, dans lequel la paroi (64, 62) est extensible via des parties de paroi pliables (170, 172), les parties de paroi pliables sont fixées de manière rotative entre elles et un actionneur (174) s'étend entre une partie et la plateforme et permet le mouvement de la partie de paroi.

9. Chariot de lavage (50) selon l'une quelconque des revendications 1 à 8, dans lequel la paroi (64, 62) est construite à partir d'une structure de châssis (90) et montée sur cette dernière, on trouve une feuille souple (92).

10. Chariot de lavage de moteur de turbine à gaz selon l'une quelconque des revendications 1 à 8, dans lequel la paroi (62, 64) comprend au moins deux parties ou unités relativement coulissantes (130, 136).

11. Chariot de lavage de moteur de turbine à gaz selon l'une quelconque des revendications 1 à 10, dans lequel la paroi (62, 64) comprend un séparateur de gouttes.

12. Chariot de lavage de moteur de turbine à gaz selon la revendication 11, dans lequel le séparateur de gouttes (130, 136, 144) est l'un quelconque d'un groupe comprenant un séparateur profilé (130) ou de style tapis (140).

13. Chariot de lavage de moteur de turbine à gaz selon l'une quelconque des revendications 1 à 12, dans lequel le bac récepteur (58) est un bac récepteur extensible (58) qui est mobile d'une position rentrée à une position déployée, dans laquelle il est directement sous le moteur pour récupérer les ruissellements ou gouttes de liquide (40, 42) tombant du moteur.

14. Chariot de lavage de moteur de turbine à gaz selon la revendication 13, dans lequel le bac récepteur extensible (58) est rentré à l'intérieur de la plateforme (52).

15. Procédé pour laver un moteur de turbine à gaz avec un chariot de lavage selon l'une quelconque des revendications 1 à 14, comprenant les étapes consistant à déplacer la paroi (64, 62) par rapport à la plateforme (52), entre une position rentrée et une position déployée pour capturer le milieu de lavage, le procédé comprend l'étape consistant à sélectionner un programme pour une configuration particulière de moteur et l'étape consistant à allonger ou faire tourner la au moins une paroi (64, 62) entre les positions rentrée et déployée.
